# EUROPEAN PATENT SPECIFICATION

(11) **EP 3 242 472 B1**
(45) Date of publication and mention of the grant of the patent: **03.11.2021**
(21) Application number: 17162915.7
(22) Date of filing: 24.03.2017
(51) Int. Cl.: H04N 5/232, H04N 21/422, H04N 21/4728, H04N 21/81

(54) **IMAGE DISPLAYING APPARATUS AND METHOD OF OPERATING THE SAME**
BILDANZEIGEVORRICHTUNG UND VERFAHREN ZUM BETRIEB DAVON
AFFICHEUR D'IMAGES ET PROCÉDÉ DE FONCTIONNEMENT CORRESPONDANT

(30) Priority: 03.05.2016 KR 20160054686
(43) Date of publication of application: 08.11.2017
(73) Proprietor: Samsung Electronics Co., Ltd., Gyeonggi-do 16677 (KR)
(72) Inventor: YOON, Hyun-don, Gyeongsangbuk-do (KR); LEE, Bong-seok, Gyeonggi-do (KR)
(74) Representative: Taor, Simon Edward William

(56) References cited:
- EP-A1- 2 469 470
- US-A1- 2009 160 996
- US-A1- 2013 247 114

## Description

The present disclosure relates generally to image display apparatuses and methods of operating the same, and for example, to an image display apparatus capable of displaying a 360-degree image and a method of operating the image display apparatus.

Image display apparatuses display an image that can be viewed by users. Users can view a broadcast via an image display apparatus. Image display apparatuses display, on a display included therein, a broadcast selected by a user from among broadcasting signals transmitted by a broadcasting station. Currently, most countries around the world have switched from analog broadcasting to digital broadcasting.

In digital broadcasting, a digital image signal and a digital audio signal are transmitted. When compared to analog broadcasting, digital broadcasting is resilient against external noise, thus, suffering little data loss, is favorable to error correction, and provides high-resolution and high-definition screen images. In addition, digital broadcasting can provide a bidirectional service, in contrast with analog broadcasting.

Smart televisions (TVs) providing various types of content in addition to a digital broadcasting function have been recently provided. Smart TVs aim to analyze and provide content desired by a user without manipulation by the user, instead of manually operating according to a selection by the user.

US 2009/160996 A1 discloses an image processing apparatus which enables images captured with a wide-angle lens to be viewed with the associated distortion removed, there is also an indicator to indicate which part of the image is being displayed.

US 2013/247114 A1 discloses a video distribution system that captures an omnidirectional video using a wide-angle lens and includes a display to view an undistorted region of the video once the region has been selected from the distorted video.

An image display apparatus that provides an interface via which a user is able to easily control a 360-degree image, and a method of operating the image display apparatus are provided.

Additional aspects will be set forth in part in the description which follows and, in part, will be apparent from the description.

According to the invention, an image display apparatus is set out according to claim 1. Preferred features are set out in claims 2 to 6.

According to an other aspect of the invention, a method of operating an image display apparatus is set out according to claim 7. Preferred features are set out in claims 8 to 12. According to an other aspect of the invention a computer-readable recording medium having recorded thereon a computer program for performing the method of any of claims 7 to 12 when executed by a computer is set out in claim 13.

These and/or other aspects, features and attendant advantages of the present disclosure will become apparent and more readily appreciated from the following detailed description, taken in conjunction with the accompanying drawings, in which like reference numerals refer to like elements, and wherein:
FIG. 1 is a diagram illustrating an example image display apparatus and example control apparatus, according to an example embodiment of the present disclosure;
FIG. 2 is a block diagram illustrating an example structure of an image display apparatus according to an example embodiment of the present disclosure;
FIG. 3 is a block diagram illustrating an example structure of an image display apparatus according to an example embodiment of the present disclosure;
FIG. 4 is a block diagram illustrating an example control apparatus according to an example embodiment of the present disclosure;
FIGS. 5A, 5B and 5C are diagrams illustrating an example embodiment of the present disclosure in which a 360-degree image and an indicator are displayed on a display;
FIGS. 6A and 6B are diagrams illustrating an example embodiment of the present disclosure in which a 360-degree image is displayed on a display;
FIGS. 7A, 7B and 7C are illustrating an example method of zooming in or out a 360-degree image, according to an example embodiment of the present disclosure;
FIGS. 8A, 8B, 8C and 8D are diagrams illustrating an example embodiment relating to the subject-matter as set out in appended claim 1 in which a preview image is displayed on a display;
FIG. 9 is a flowchart illustrating an example method of operating an image display apparatus, according to an example embodiment of the present disclosure; and
FIG. 10 is a flowchart illustrating an example method of operating an image display apparatus, according to an example embodiment relating to the subject-matter as set out in appended claim 7.

The terminology used herein will now be briefly described as the present disclosure will be described in detail based on this terminology.

Although general terms widely used at present were selected for describing the present disclosure in consideration of the functions thereof, these general terms may vary according to intentions of one of ordinary skill in the art, case precedents, the advent of new technologies, and the like. Terms arbitrarily selected may also be used in a specific case. In this case, their meanings need to be given in the detailed description of the present disclosure. Hence, the terms must be defined based on their meanings and the contents of the entire disclosure, not by simply stating the terms.

The terms "comprises" and/or "comprising" or "includes" and/or "including" when used in this disclosure, specify the presence of stated elements, but do not preclude the presence or addition of one or more other elements. The terms "...unit" and "... module" when used in this disclosure may refer, for example, to a unit in which at least one function or In operation is performed, and may be implemented as hardware, software, or a combination of hardware and software.

Various example embodiments are described in detail herein with reference to the accompanying drawings so that this disclosure may be easily performed by one of ordinary skill in the art to which the present disclosure pertain. The disclosure may, however, be embodied in many different forms and should not be construed as being limited to the embodiments set forth herein. In the drawings, parts irrelevant to the description are omitted for simplicity of explanation, and like numbers refer to like elements throughout.

The term "user" used herein denotes a person who controls a function or operation of an image display apparatus by using a control apparatus. Examples of the user may include a viewer, a manager, or an installation engineer.

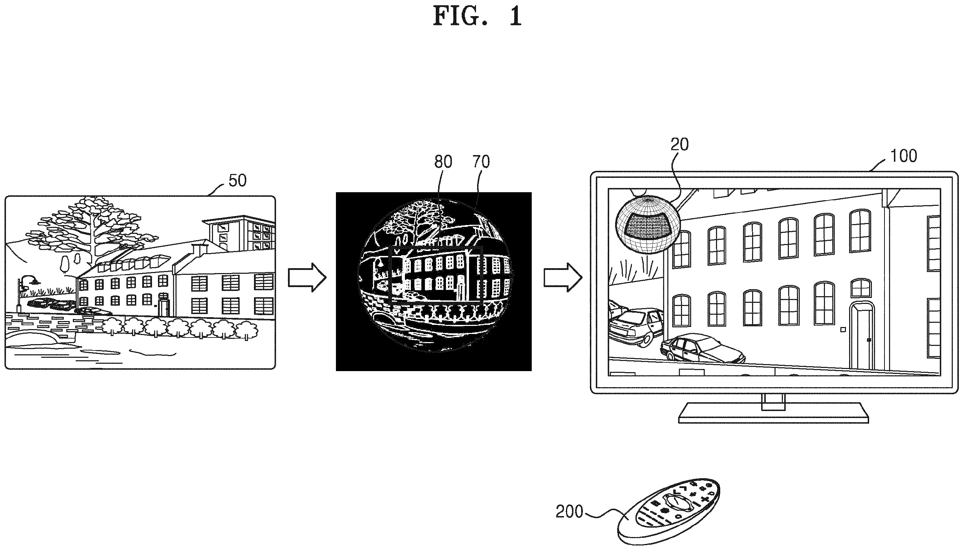

FIG. 1 is a diagram illustrating an example image display apparatus 100 that displays a 360-degree image, and a control apparatus 200, according to an example embodiment of the present disclosure.

Referring to FIG. 1, the image display apparatus 100 may display a 360-degree image. The 360-degree image according to an embodiment may be an image having an angle of view of 360 degrees. For example, the 360-degree image may be an image generated based on a plurality of images captured in a direction of 360 degrees by using at least one camera. In this regard, the captured plurality of images may be mapped to a sphere, and contact points of the mapped images may be stitched, and thus a spherical 360-degree image maybe generated. Also, the spherical 360-degree image may be converted into a planar 360-degree image 50 so as to be transmitted to or stored in another device as illustrated in FIG. 1.

The image display apparatus 100 according to an embodiment may convert the planar 360-degree image 50 into a spherical 360-degree image 70 by performing graphics processing on the planar 360-degree image 50. The image display apparatus 100 may select a region 80 from the spherical 360-degree image 70 and display an image corresponding to the selected region 80 on a display. In this regard, the image display apparatus 100 may scale the image corresponding to the selected region 80 according to a resolution of the display and display the scaled image on the display. The image display apparatus 100 according to an embodiment may display a three-dimensional (3D) indicator 20 indicating a location of the region 80 within the 360-degree image 70.

The image display apparatus 100 according to an embodiment may be a TV, but this is merely an embodiment and the present disclosure is not limited thereto. The image display apparatus 100 may be implemented as an electronic device including a display. For example, the image display apparatus 100 may be any type of electronic device, such as a mobile phone, a tablet personal computer (PC), a digital camera, a camcorder, a laptop computer, a desktop computer, an e-book terminal, a digital broadcast terminal, a personal digital assistant (PDA), a portable multimedia player (PMP), a navigation device, an MP3 player, or a wearable device, or the like. In particular, example embodiments of the image display apparatus 100 may be easily implemented in a display apparatus having a large display, such as a TV. However, embodiments are not limited thereto. The image display apparatus 100 may be fixed or movable, or a digital broadcast receiver.

The image display apparatus 100 may be implemented as not only a flat display apparatus but also a curved display apparatus having a curvature or a flexible display apparatus with an adjustable curvature. An output resolution of the display apparatus 100 may be, for example, a high definition (HD), a full HD, an ultra HD, or a resolution that is clearer than an ultra HD.

The image display apparatus 100 may be controlled by a control apparatus. The control apparatus 200 may be implemented as any of various types of devices for controlling the image display apparatus 100, such as, for example, and without limitation, a remote controller or a mobile phone.

The control apparatus 200 may control the display apparatus 100 via short-range communication including, for example, infrared or Bluetooth. The control apparatus 200 may control a function of the display apparatus 100 by using at least one selected from keys (including buttons) included in the control apparatus 200, a touch pad, a microphone (not shown) capable of receiving voices of users, and a sensor (not shown) capable of recognizing motions of the control apparatus 200.

For example, the control apparatus 200 may include 4 directional keys (or 4 direction buttons). The 4 directional keys may be used to move the location of the region 80 displayed on the display within the 360-degree image 70.

The control apparatus 200 may be a pointing device. For example, when the control apparatus 200 receives a certain key input, the control apparatus 200 may operate as a pointing device. When the control apparatus 200 operates as a pointing device, the image display apparatus 100 may be controlled by a user input for moving the control apparatus 200 upward, downward, leftward, or rightward, or tilting the control apparatus 200 in any random direction. Information about a motion of the control apparatus 200 that is sensed via the sensor of the control apparatus 200 may be transmitted to the image display apparatus 100. The image display apparatus 100 may move the region 80 displayed on the display within the 360-degree image 70, based on the motion information of the control apparatus 200.

Alternatively, when the control apparatus 200 includes a touchpad, according to a displacement value of a subject moving on the touchpad, for example, a user's finger, the image display apparatus 100 may move the region 80 displayed on the display within the 360-degree image 70.

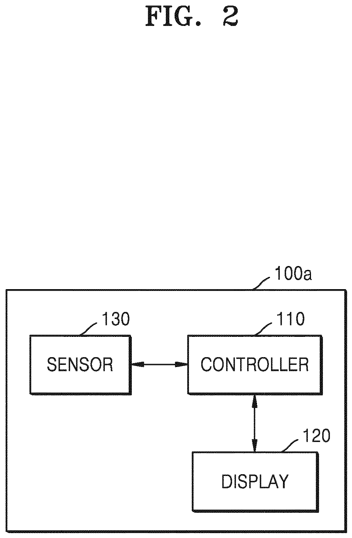

FIG. 2 is a block diagram illustrating an example structure of an image display apparatus 100a according to an example embodiment of the present disclosure. The image display apparatus 100a of FIG. 2 may be an embodiment of the image display apparatus 100 of FIG. 1.

Referring to FIG. 2, the image display apparatus 100a may include a controller (e.g., including processing circuitry) 110, a display 120, and a sensor 130.

The display 120 may generate a driving signal by converting an image signal, a data signal, an on-screen display (OSD) signal, and a control signal that are processed by the controller 110. The display 120 may be a plasma display panel (PDP), a liquid-crystal display (LCD), an organic light-emitting device (OLED), a flexible display, or a 3D display. The display 120 may be configured as a touch screen, and thus may serve as an input device as well as an output device.

The display 120 may display an image corresponding to a region of a 360-degree image and a 3D indicator indicating a location of the region.

The sensor 130 may sense a user input and transmit a signal corresponding to the sensed user input to the controller 110. Examples of the user input received from the control apparatus 200 and sensed by the sensor 130 may include turning power on/off, selecting channels, raising and lowering channels, and setting a screen. In addition, the sensor 130 may sense an input for moving the location of the region displayed on the display 120 from among the 360-degree image, an input for zooming in or out the image displayed on the display 120, an input for displaying preview images corresponding to the region displayed on the display 120 and the other region, an input for adjusting the number of preview images, and an input for displaying an image corresponding to a region at a specific location from among the 360-degree image. However, embodiments are not limited thereto.

The controller 110 may include various processing circuitry and process an image signal and transmit the processed image signal to the display 120. Accordingly, an image corresponding to the processed image signal may be displayed on the display 120. The controller 110 may control the image display apparatus 100a via a user command detected by the sensor 130 or an internal program.

For example, according to an embodiment, the controller 110 may move the location of the region displayed on the display 120 from among the 360-degree image according to the detected user input, and may control the display 120 to display an images corresponding to the moved region. The controller 110 may also move a pointer included in a 3D indicator such that the pointer points the moved location of the region.

The controller 110 may decrease or increase the range of the region displayed on the display 120 from among the 360-degree image, according to the sensed zoom-in or zoom-out input. Accordingly, the controller 110 may decrease or increase the size or area of a pointer corresponding to the region.

The controller 110 may also control the display 120 to display the preview images of one or more regions different from the region displayed on the display 120, according to the sensed preview image display input. The controller 110 may also increase or decrease the number of preview images, according to the input for adjusting the number of preview images.

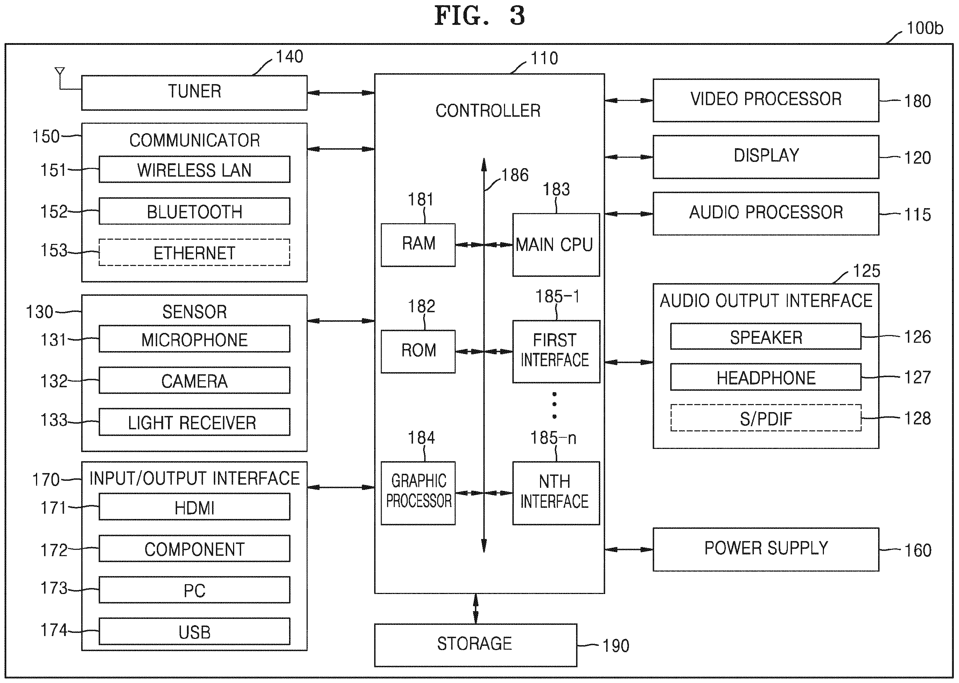

FIG. 3 is a block diagram illustrating an example structure of an image display apparatus 100b according to an example embodiment of the present disclosure. The image display apparatus 100b of FIG. 3 may be an embodiment of the image display apparatus 100 of FIG. 1.

Referring to FIG. 3, the display apparatus 100b may further include a video processor 180, an audio processor 115, an audio output interface (e.g., including audio output circuitry) 125, a power supply 160, a tuner 140, a communicator (e.g., including communication circuitry) 150, an input/output interface (e.g., including input/output interface circuitry) 170, and a storage 190, in addition to the controller 110, the display 120, and the sensor 130.

With regard to the controller 110, the display 120, and the sensor 130, elements and features as described with reference to FIG. 2 will not be repeated.

The video processor 180 may include various circuitry and/or program elements that process video data that is received by the image display apparatus 100b. The video processor 180 may perform a variety of image processing, such as decoding, scaling, noise filtering, frame rate transformation, and resolution transformation, on video data.

The display 120 displays video included in a broadcasting signal received via the tuner 140 on the screen thereof, under the control of the controller 110. The display 120 may also display content (for example, a moving picture) that is input via the communicator 150 or the inputter/outputter 170. The display 120 may output an image stored in the storage 190 under the control of the controller 110. The display 120 may also display a voice user interface (UI) (e.g., including a voice command word guide) for performing a voice recognition task corresponding to voice recognition, or a motion UI (e.g., including a user motion guide for motion recognition) for performing a motion recognition task corresponding to motion recognition.

The audio processor 115 may include various circuitry and/or program elements that process audio data. The audio processor 115 may perform a variety of processing, such as decoding, amplification, or noise filtering, on the audio data. The audio processor 115 may include a plurality of audio processing modules to process audios corresponding to a plurality of pieces of content.

The audio output interface 125 may include various circuitry that outputs audio included in a broadcasting signal received via the tuner 140, under the control of the controller 180. The audio output interface 125 may also output audio (for example, a voice or a sound) that is input via the communicator 150 or the inputter/outputter 170. The audio output interface 125 may also output audio stored in the storage 190 under the control of the controller 110. The audio output interface 125 may include various audio output circuitry, such as, for example, and without limitation, at least one selected from a speaker 126, a headphone output port 127, and a Sony/Philips Digital Interface (S/PDIF) output port 128. The audio outputter 125 may include a combination of the speaker 126, the headphone output port 127, and the S/PDIF output port 128.

The power supply 160 supplies power that is input from an external power source, to the internal components of the image display apparatus 100b, under the control of the controller 110. The power supply 160 may also supply power that is output by one or more batteries (not shown) located in the image display apparatus 100b, to the internal components of the image display apparatus 100b, under the control of the controller 110.

The tuner 140 may tune and select only a frequency of a channel which the image display apparatus 100b wants to receive from among many radio wave components that are obtained via amplification, mixing, resonance, or the like of a wired or wireless broadcasting signal. The broadcasting signal includes audio, video, and additional information (for example, an electronic program guide (EPG)).

The tuner 140 may receive a broadcasting signal in a frequency band corresponding to a channel number (e.g., cable broadcasting No. 506) according to a user input (for example, a control signal received from the control apparatus 200, e.g., a channel number input, a channel up-down input, and a channel input on an EPG screen image).

The tuner 140 may receive a broadcasting signal from various sources, such as terrestrial broadcasting, cable broadcasting, satellite broadcasting, and Internet broadcasting. The tuner 140 may also receive a broadcasting signal from a source such as analog broadcasting or digital broadcasting. The broadcasting signal received via the tuner 140 is decoded (for example, audio decoding, video decoding, or additional information decoding) and is thus divided into audio, video, and/or additional information. The audio, the video, and/or the additional information may be stored in the storage 190 under the control of the controller 110.

The image display apparatus 100b may include a single tuner 140 or a plurality of tuners 140. The tuner 140 may be all-in-one with the image display apparatus 100b, or implemented as a separate apparatus (for example, a tuner that is connected to a set-top box and the input/outputter 170) having a tuner that is electrically connected to the image display apparatus 100b.

The communicator 150 may include various communication circuitry and connect the image display apparatus 100b to an external apparatus (for example, an audio apparatus) under the control of the controller 110. The controller 110 may transmit/receive content to/from the external apparatus connected via the communicator 150, download an application from the external apparatus, or perform web-browsing. The communicator 150 may include various communication circuitry, such as, for example, and without limitation, a wireless local area network (LAN) 151, a Bluetooth network 152, or a wired Ethernet network 153 in correspondence to a performance and a structure of the image display apparatus 100b. The communicator 150 may include a combination of the wireless LAN 151, the Bluetooth network 152, and the wired Ethernet network 153. The communicator 150 may receive a control signal of the control apparatus 200 under the control of the controller 110. The control signal may be implemented as a Bluetooth signal, a radio frequency (RF) signal, or a Wi-Fi signal.

The communicator 150 may further include short-range communication (for example, near field communication (NFC) or Bluetooth low energy (BLE)), in addition to the Bluetooth network 152.

The sensor 130 may include various circuitry that senses a voice of a user, an image of the user, or an interaction with the user, and may include, for example, and without limitation, a microphone 131, a camera 132, and a light receiver 133.

The microphone 131 receives an uttered voice of the user. The microphone 131 may transform the received voice into an electrical signal and output the electrical signal to the controller 110. The user voice may include, for example, a voice corresponding to a menu or function of the image display apparatus 100b.

The camera 132 may receive an image (for example, consecutive frames) corresponding to a motion of the user including a gesture within a recognition range of the camera 132. The controller 110 may select a menu that is displayed on the image display apparatus 100b by using a result of the recognition of the received motion, or perform control corresponding to the result of the motion recognition. For example, the control may be channel adjustment, volume adjustment, indicator movement, cursor movement, movement of a region displayed on a display from among a 360-degree image, and movement of a pointer included in a 3D indicator.

The light receiver 133 receives an optical signal (including a control signal) from the control apparatus 200 via a light window (not shown) of the bezel of the display 120. The light receiver 133 may receive an optical signal corresponding to a user input (for example, touch, pressing, a touch gesture, a voice, or a motion) from the control apparatus 200. A control signal may be extracted from the received optical signal under the control of the controller 110.

The input/output interface 170 may include various input/output circuitry and receives video (for example, a moving picture), audio (for example, a voice or music), and additional information (for example, an EPG) from outside the image display apparatus 100b under the control of the controller 110. The input/output interface 170 may include various circuitry, such as, for example, and without limitation, a High-Definition Multimedia Interface (HDMI) port 171, a component jack 172, a PC port 173, or a USB port 174. The inputter/outputter 170 may include a combination of the HDMI port 171, the component jack 172, the PC port 173, and the USB port 174.

The controller 110 may include various processing circuitry and controls an overall operation of the image display apparatus 100b and signal transfer among the internal components of the image display apparatus 100b and processes data. When there is an input of a user or stored preset conditions are satisfied, the controller 110 may execute an operation system (OS) and various applications that are stored in the storage 190.

The controller 110 may include random-access memory (RAM) 181 that stores a signal or data input by an external source of the image display apparatus 100b or is used as a memory area for various operations performed by the image display apparatus 100b, read-only memory (ROM) 182 that stores a control program for controlling the image display apparatus 100b, and a processor 183.

The processor 183 may include a graphics processing unit (not shown) for performing video graphics processing. The processor 183 may be implemented by using a System On Chip (SoC) into which a core and a GPU are incorporated. The processor 183 may include a single core, a dual core, a triple core, a quad core, or a multiple core thereof.

The processor 183 may include a plurality of processors. For example, the processor 183 may be implemented by using a main processor and a sub-processor operating in a sleep mode.

A graphics processor 184 generates a screen image including various objects, such as an icon, an image, and a text, by using an arithmetic unit and a rendering unit. The arithmetic unit calculates attribute values, such as a coordinate value, a shape, a size, a color, and the like, with which each object is to be displayed according to layouts of the screen image, based on the user interaction sensed by the sensor 130. The rendering unit generates screen images of various layouts including objects, based on the attribute values calculated by the arithmetic unit. The screen images generated by the rendering unit are displayed on a display area of the display 120. As described above with reference to FIG. 1, the graphics processor 184 may map a planar 360-degree image to a sphere to generate a spherical 360-degree image.

First through n-th interfaces 185-1 through 185-n are connected to the above-described components of the image display apparatus 100b. One of the first through n-th interfaces 185-1 through 185-n may be a network interface that is connected to an external apparatus via a network.

The RAM 181, the ROM 182, the processor 183, the graphics processor 184, and the first through n-th interfaces 185-1 through 185-n may be connected to each other via an internal bus 186.

The term "a controller of an image display apparatus" used in the present embodiment includes the processor 183, the ROM 182, and the RAM 181.

The storage 190 may store various data, programs, or applications for driving and controlling the image display apparatus 100b under the control of the controller 110. The storage 190 may store input/output signals or data corresponding to driving of the video processor 180, the display 120, the audio processor 115, the audio outputter 125, the power supply 160, the tuner 140, the communicator 150, the sensor 130, and the inputter/outputter 170. The storage 190 may store a control program for controlling the image display apparatus 100b and the controller 180, an application initially provided by a manufacturer or downloaded from outside the image display apparatus 100b, a graphical user interface (GUI) associated with the application, objects (for example, an image text, an icon, and a button) for providing the GUI, user information, a document, databases, or related pieces of data.

According to an embodiment, the term "storage unit" includes the storage 190, the ROM 182 or the RAM 181 of the controller 180, or a memory card (e.g., a micro SD card or a USB memory) mounted in the image display apparatus 100b. The storage 190 may include a non-volatile memory, a volatile memory, a hard disk drive (HDD), or a solid state drive (SSD).

The image display apparatus 100b having the display 120 may be electrically connected to an external apparatus (for example, a set-top box) having a tuner. For example, the image display apparatus 100b may be implemented by using an analog TV, a digital TV, a 3D TV, a smart TV, an LED TV, an OLED TV, a plasma TV, a monitor, or the like, but it will be easily understood by one of ordinary skill in the art that embodiments are not limited thereto.

The block diagrams of the image display apparatuses 100a and 110b illustrated in FIGS. 2 and 3 are merely example embodiments. Components illustrated in FIGS. 2 and 3 may be combined or omitted according to the specifications of the image display apparatus 100 when being actually implemented, or additional components may be included in the block diagrams of FIGS. 2 and 3. In other words, according to need, two or more components are combined into a single component, or a single component may be divided into two or more components. A function performed in each block is only an example to explain embodiments, and a detailed operation or device of each block does not limit the scope of the embodiments.

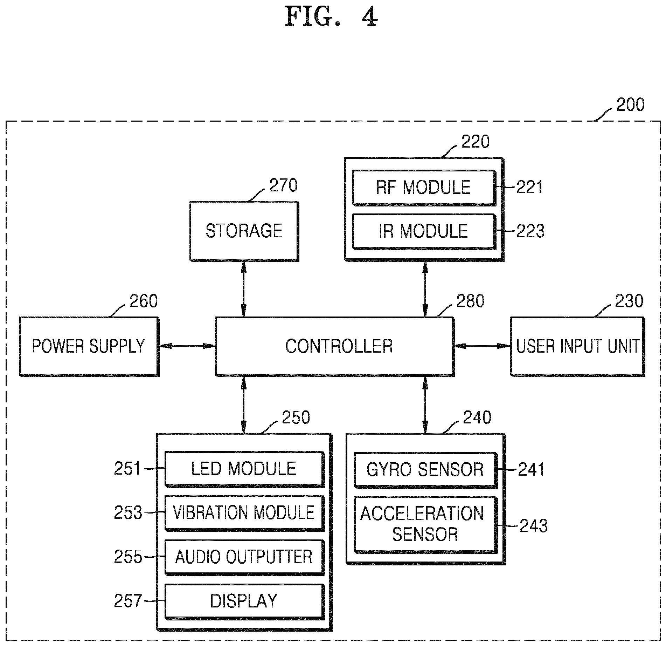

FIG. 4 is a block diagram illustrating an example control apparatus 200 according to an example embodiment of the present disclosure.

Referring to FIG. 4, the control apparatus 200 may include a wireless communicator (e.g., including wireless communication circuitry) 220, a user input interface (e.g., including input circuitry) 230, a sensor 240, an outputter (e.g., including output circuitry) 250, a power supply 260, a storage 270, and a controller 280.

The wireless communicator 220 may include various communication circuitry and transmit and receive signals to and from any of the above-described image display apparatuses 100, 100a, and 100b. The wireless communicator 220 may include various wireless communication circuitry, such as, for example, and without limitation, an RF module 221 that may transmit and receive signals to and from the image display apparatus 100 according to an RF communication standard, and an IR module 223 that may transmit and receive to and from the image display apparatus 100 according to an IR communication standard.

The user input interface 230 may include various input circuitry, such as, for example, and without limitation, a keypad, buttons, a touchpad, or a touch screen. The user may manipulate the user input unit 230 to input commands related to the image display apparatus 100 to the control apparatus 200.

For example, the user input interface 230 may include 4 direction buttons or 4 directional keys. The four direction buttons or four direction keys may be used to control a window, an area, an application, or an item displayed on the display 120. Four direction buttons or keys may be used to indicate up, down, left, and right movements. It will be understood by one of ordinary skill in the art that the user input interface 230 may include two direction keys or two direction buttons instead of four direction buttons or four direction keys. The user input interface 230 may also include various types of input units that may be manipulated by the user, such as a scroll key or a jog key.

The user input interface 230 may receive a user input for dragging, touching, or flipping via the touchpad of the control apparatus 200. The image display apparatus 100 may be controlled according to a type of received user input (for example, a direction in which a drag command is input or time when a touch command is input).

The sensor 240 may include a gyroscopic (gyro) sensor 241 or an acceleration sensor 243. The gyro sensor 241 may sense information about movements of the control apparatus 200. The acceleration sensor 243 may sense information about a movement speed of the control apparatus 200. The gyro sensor 241 may additionally include a distance estimation sensor that may sense a distance between the control apparatus 200 and the image display apparatus 100.

The outputter 250 may include various output circuitry and output an image signal or an audio signal which corresponds to a manipulation of the user input unit 230 or a signal received by the image display apparatus 100. The user may recognize whether the user input unit 230 is manipulated or whether the image display apparatus 100 is controlled, via the outputter 250. For example, the outputter 250 may include various output circuitry, such as, for example, and without limitation, an LED 251, a vibration module 253, an audio outputter 255, or a display 257.

The power supply 260 supplies power to the control apparatus 200.

The storage 270 may store programs or application data necessary for control of the control apparatus 200 or an operation thereof.

The controller 280 may include various processing circuitry and controls overall operations related to controlling the control apparatus 200. The controller 280 may transmit a signal corresponding to a predetermined key manipulation of the user input unit 230 or a signal corresponding to a movement of the control apparatus 200 sensed by the sensor 240, to the image display apparatus 100 via the wireless communicator 220.

A signal transmitted by the control apparatus 200 is detected by the sensor 130 and transmitted to the controller 110 of the image display apparatus 100. The controller 110 may determine information about the operations and a key manipulation of the control apparatus 200 based on the signal transmitted by the control apparatus 200, and control the image display apparatus 100 according to the information.

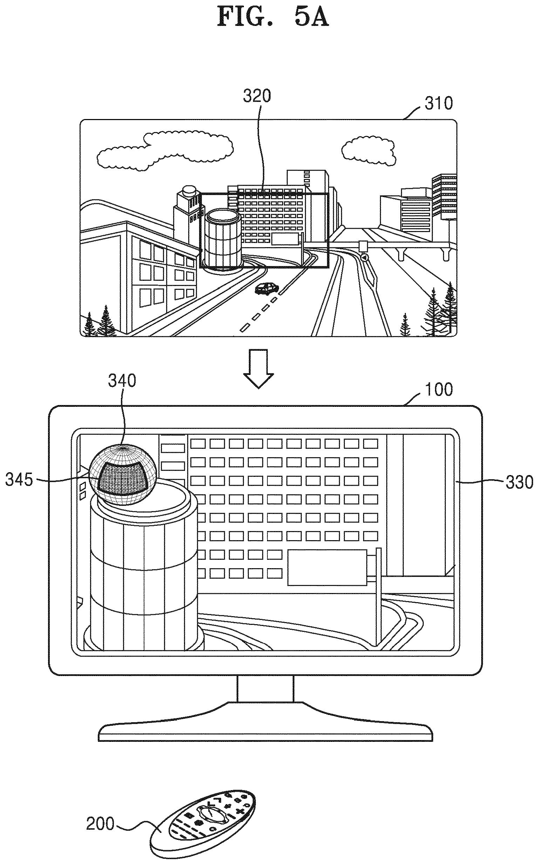

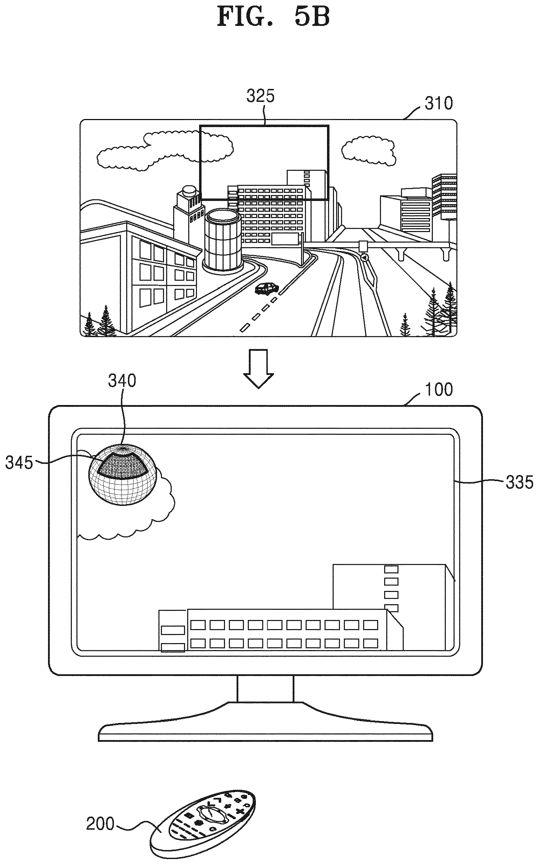

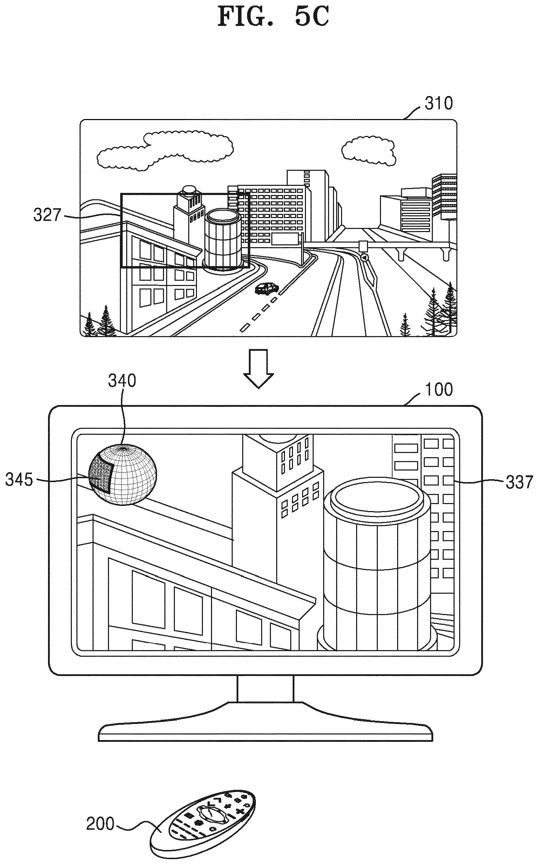

FIGS. 5A, 5B and 5C are diagrams illustrating an example embodiment of the present disclosure in which a 360-degree image is displayed on a display.

Referring to FIG. 5A, the image display apparatus 100 may display a first image 330 corresponding to a region 320 of a planar 360-degree image 310, and a 3D indicator 340 indicating a location of the region 320. The 3D indicator 340 may include a pointer 345 indicating the location of the region 320.

For example, the first image 330 may be an image in a front direction from within a 360-degree image. As illustrated in FIG. 5A, the first image 330 may be an image corresponding to the region 320 located at the center from within the planar 360-degree image 310. The 3D indicator 340 may be a spherical indicator or a cylindrical indicator, but embodiments are not limited thereto. An example in which the 3D indicator 340 is a spherical indicator will now be described for convenience of description. For example, the pointer 345 may have a curved shape corresponding to a surface shape of the spherical indicator 340. Alternatively, the pointer 345 may have an arrow shape that pointing to one spot of the region 320, but embodiments are not limited thereto. The size or area of the pointer 345 may be previously set or may be set based on a user input.

The image display apparatus 100 may sense an input for moving the location of the region 320 displayed from within the planar 360-degree image 310. For example, the image display apparatus 100 may sense inputs of the 4 directional keys included in the control apparatus 200, an input for moving the control apparatus 200 upward, downward, leftward, or rightward or tilting the control apparatus 200 in an arbitrary direction, and a touch input on a touch pad included in the control apparatus 200, but embodiments are not limited thereto.

The image display apparatus 100 may move the location of the region 320, in response to an input for moving the location of the region 320. For example, the image display apparatus 100 may move the location of the region 320 within the planar 360-degree image 310 upward, downward, leftward, or rightward or may move the location of a region from within a spherical 360-degree image in an altitudinal direction or an azimuthal direction.

For example, when an input of an upward key among the 4 directional keys of the control apparatus 200 is sensed, as illustrated in FIG. 5B, the image display apparatus 100 may move the location of the region 320 upward within the planar 360-degree image 310. When the location of the region 320 is moved, the image display apparatus 100 may display a second image 335 corresponding to a region 325 to which the region 320 has been moved. The image display apparatus 100 may also move the pointer 345 in the altitudinal direction within the spherical indicator 340 in order to indicate the location of the region 325.

Alternatively, when an input of a leftward key among the 4 directional keys of the control apparatus 200 is sensed, as illustrated in FIG. 5C, the image display apparatus 100 may move the location of the region 320 leftward within the planar 360-degree image 310. When the location of the region 320 is moved, the image display apparatus 100 may display a third image 337 corresponding to a region 327 to which the region 320 has been moved. The image display apparatus 100 may also move the pointer 345 in the azimuthal direction within the spherical indicator 340 in order to indicate the location of the region 327.

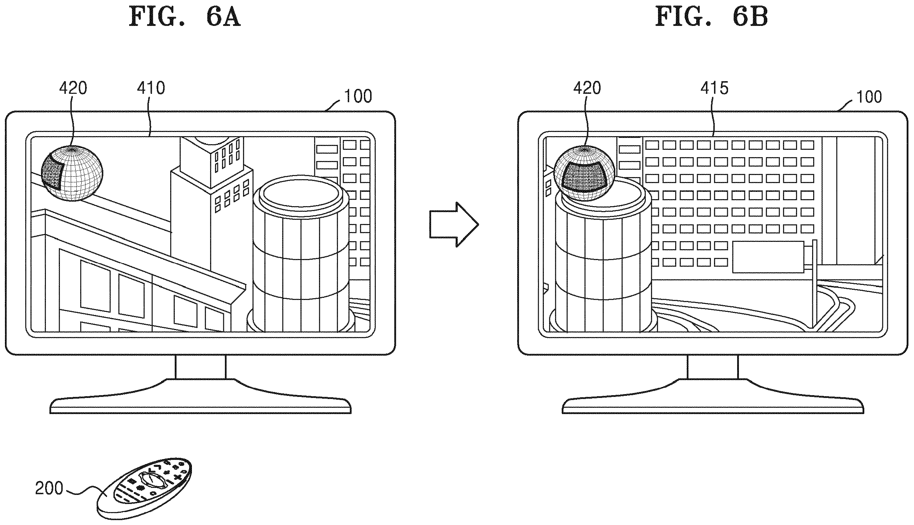

FIGS. 6A and 6B are diagrams illustrating an example embodiment of the present disclosure in which a 360-degree image is displayed on a display.

Referring to FIG. 6A, the image display apparatus 100 may display an image 410 corresponding to a region of a 360-degree image, and a 3D indicator 420 indicating a location of the region. In this regard, the image 410 displayed on the display may be an image corresponding to a region to which a certain region located at the center within a spherical 360-degree image has been rotated by a certain angle in the azimuthal direction.

For example, the image display apparatus 100 may sense a user input of a specific key included in the control apparatus 200. However, embodiments are not limited thereto.

The image display apparatus 100 may move the region to a specific location in response to the input of the specific key, and may control the display to display an image of a region corresponding to the specific location. For example, as shown in FIG. 6B, the image display apparatus 100 may move the region to a front direction location within the spherical 360-degree image or move the region to the center of the planar 360-degree image, and thus may control the display to display a front direction image 415.

Different specific locations and different specific regions may be set for the number keys included in the control apparatus 200. For example, a front direction image may be set for a number key '1', an image rotated 90 degrees from a front direction to the azimuthal direction may be set for a number key '2', and an image rotated 180 degrees from a front direction to the azimuthal direction may be set for a number key'3'. However, embodiments are not limited thereto.

Accordingly, a user may first display a 360-degree image by moving the region to various locations within the 360-degree image, and then may display an image of a specific region on the display in response to an input of a specific key.

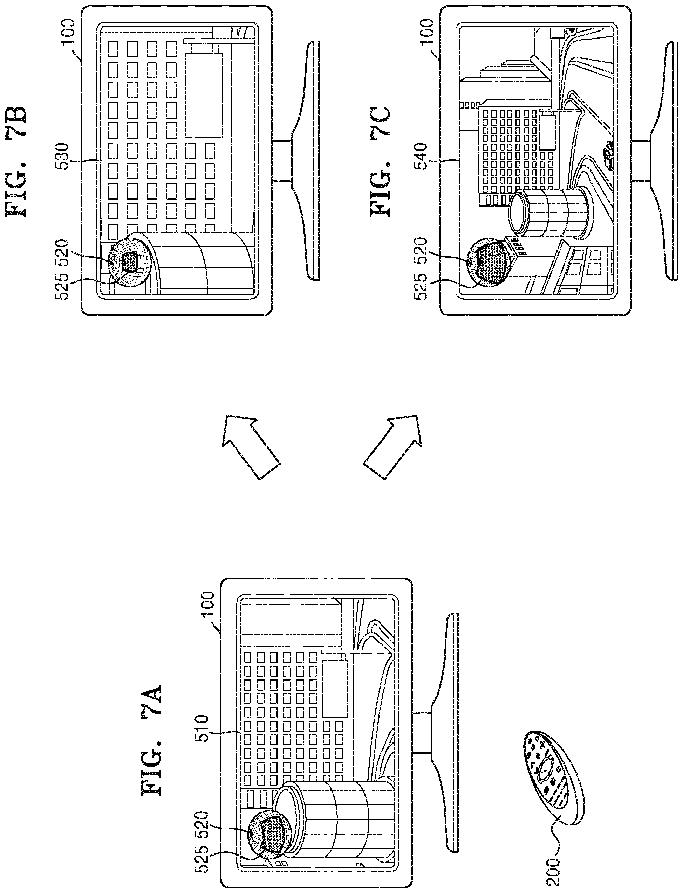

FIGS. 7A, 7B and 7C are diagrams illustrating an example method of zooming in or out a 360-degree image, according to an example embodiment of the present disclosure.

Referring to FIG. 7A, the image display apparatus 100 may display an image (first image 510) corresponding to a region of a 360-degree image, and a 3D indicator 520 indicating a location of the region. For example, the image 510 displayed on the display may be a front direction image corresponding to a region located in the front direction from within the spherical 360-degree image, but embodiments are not limited thereto.

Accordingly, a pointer 525 may be displayed at a front direction portion of the 3D indicator 520 in a spherical shape, and the area of the pointer 525 may be a first area.

The image display apparatus 100 may sense a user input for zooming in an image that is displayed. For example, the image display apparatus 100 may sense a user input of an upward key or a rightward key among the four directional keys included in the control apparatus 200, but embodiments are not limited thereto.

In response to a zoom-in input, the image display apparatus 100 may display a second image 530 obtained by zooming in the first image 510, as shown in FIG. 7B. Accordingly, the size of a region corresponding to the second image 530 may decrease. When the size of the region decreases, the image display apparatus 100 may decrease the area of the pointer 525 displayed on the 3D indicator 520 in the spherical shape from the first area to a second area.

The image display apparatus 100 may sense a user input for zooming out an image that is displayed. For example, the image display apparatus 100 may sense a user input of a downward key or a leftward key among the four directional keys included in the control apparatus 200, but embodiments are not limited thereto.

In response to a zoom-out input, the image display apparatus 100 may display a third image 540 obtained by zooming out the first image 510, as shown in FIG. 7C. Accordingly, the size of a region corresponding to the third image 540 may increase. When the size of the region increases, the image display apparatus 100 may increase the area of the pointer 525 displayed on the 3D indicator 520 in the spherical shape from the first area to a third area.

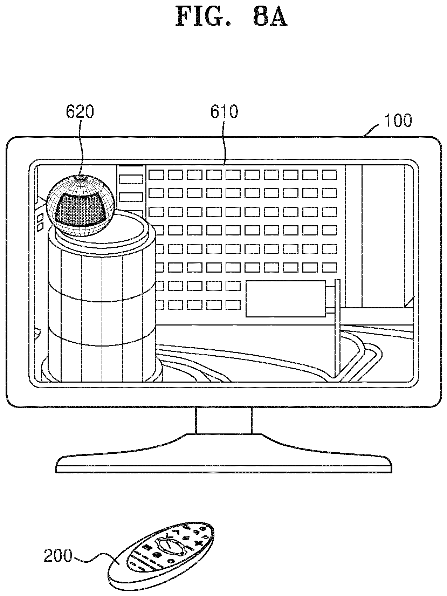

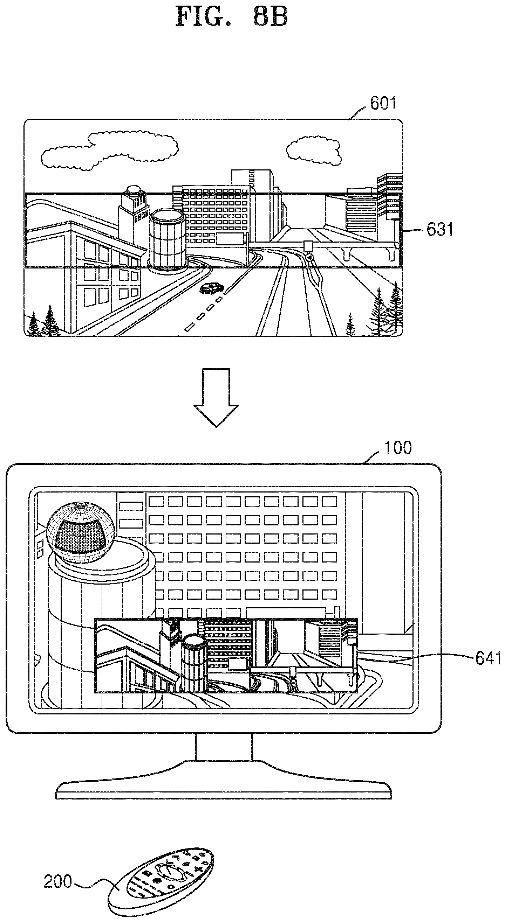

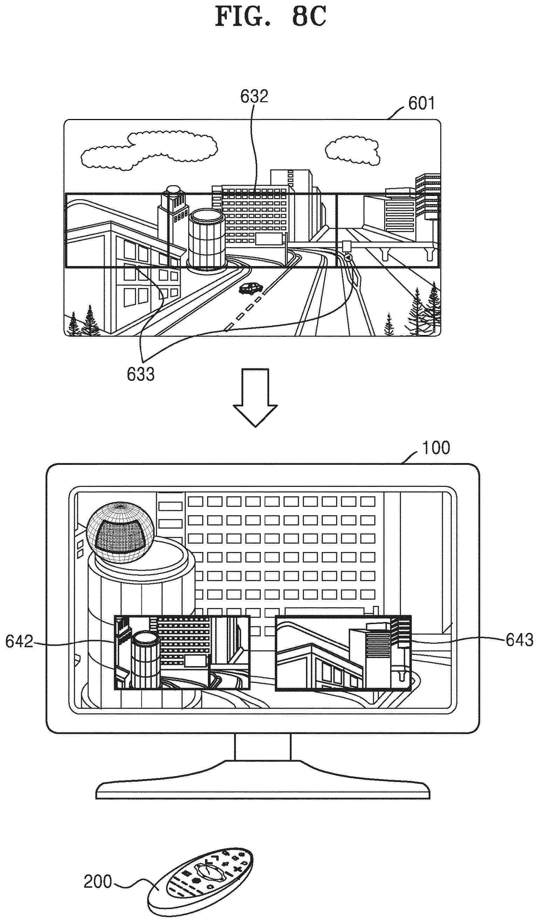

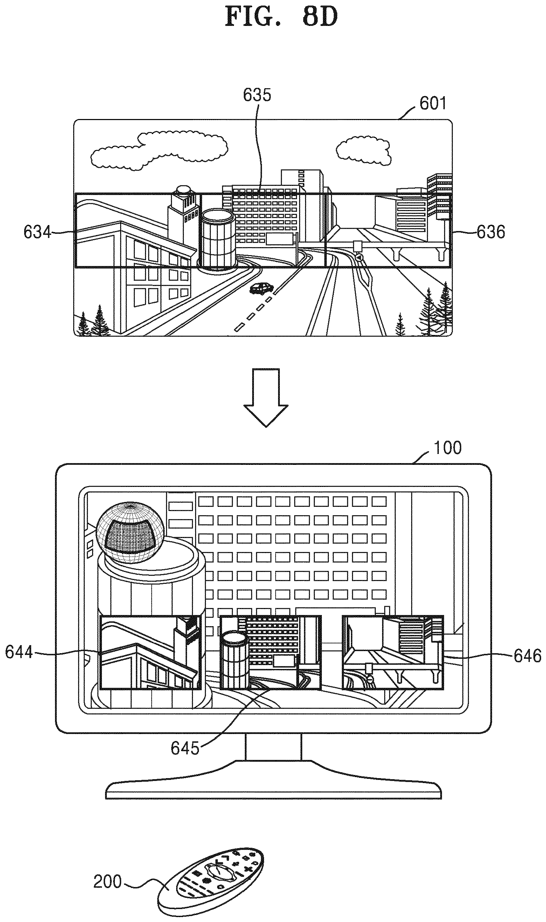

FIGS. 8A, 8B, 8C and 8D are diagrams illustrating an example embodiment of the present disclosure in which a preview image is displayed on a display.

Referring to FIG. 8A, the image display apparatus 100 may display an image 610 corresponding to a region of a 360-degree image, and a 3D indicator 620 indicating a location of the region. The image display apparatus 100 may sense a user input for displaying a preview image. For example, the image display apparatus 100 may sense an input of a specific key included in the control apparatus 200, but embodiments are not limited thereto.

In response to a preview display requesting input, the image display apparatus 100 may display a first preview image 641 corresponding to a first region 631 of a 360-degree image 601, as illustrated in FIG. 8B. A preview image may be displayed on a region of the display.

The image display apparatus 100 may sense a user input for adjusting the number of preview images, when preview images have been displayed. For example, the image display apparatus 100 may sense an input of a directional key or a number key included in the control apparatus 200, but embodiments are not limited thereto.

When an input for adjusting the number of preview images is sensed, the image display apparatus 100 may increase or decrease the number of preview images. For example, when the first preview image 641 has been displayed and an input of an upward key or a rightward key is sensed, the image display apparatus 100 may display a second preview image 642 corresponding to a second region 632 of the 360-degree image 601 and a third preview image 643 corresponding to a third region 633 of the 360-degree image 601, as illustrated in FIG. 8C.

When the second and third preview images 642 and 643 have been displayed and an input of an upward key or a rightward key is sensed or an input of a number key '3' is sensed, the image display apparatus 100 may display a fourth preview image 644 corresponding to a fourth region 634 of the 360-degree image 601, a fifth preview image 645 corresponding to a fifth region 635 of the 360-degree image 601, and a sixth preview image 646 corresponding to a sixth region 636 of the 360-degree image 601, as illustrated in FIG. 8D.

On the other hand, when the second and third preview images 642 and 643 have been displayed and an input of a downward key or a leftward key is sensed or an input of a number key '1' is sensed, the image display apparatus 100 may display the first preview image 641 corresponding to the first region 631 of the 360-degree image 601, as illustrated in FIG. 8B.

When an input of selecting one of at least one preview image displayed on the display is sensed, the image display apparatus 100 may display an image corresponding to the selected preview image on the entire screen of the display.

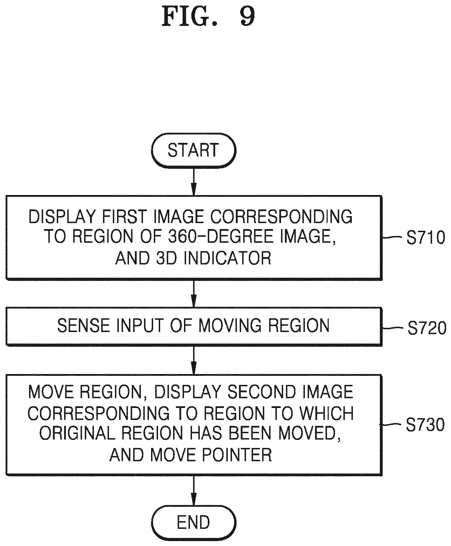

FIG. 9 is a flowchart illustrating an example method of operating the image display apparatus 100, according to an example embodiment of the present disclosure.

Referring to FIG. 9, the image display apparatus 100 may display a first image corresponding to a region of a 360-degree image, and a 3D indicator, in operation S710.

For example, the image display apparatus 100 may display an image corresponding to a region of a planar 360-degree image or a spherical 360-degree image. The 3D indicator may be a spherical indicator or a cylindrical indicator. The 3D indicator may include a pointer that points to a location of the region. The pointer may have any of various shapes, and the size or area of the pointer may be previously set or may be set based on a user input.

In operation S720, the image display apparatus 100 may sense an input (e.g., a user input) of moving the region.

For example, the image display apparatus 100 may sense inputs of the 4 directional keys included in the control apparatus 200, an input for moving the control apparatus 200 upward, downward, leftward, or rightward or tilting the control apparatus 200 in an arbitrary direction, and a touch input on a touch pad included in the control apparatus 200, but embodiments are not limited thereto.

In operation S730, the image display apparatus 100 may move the region, control the display to display a second image corresponding to a region to which the region has been moved, and move a pointer based on the movement of the region.

For example, the image display apparatus 100 may move the location of the region 320 within the planar 360-degree image 310 upward, downward, leftward, or rightward or may move the location of the region from within the spherical 360-degree image in the altitudinal direction or the azimuthal direction.

When the location of the region is moved, the image display apparatus 100 may display a second image corresponding to the region to which the region has been moved. The image display apparatus 100 may also move the pointer in the altitudinal direction or the azimuthal direction within the 3D indicator in order to indicate the location of the region to which the region has been moved.

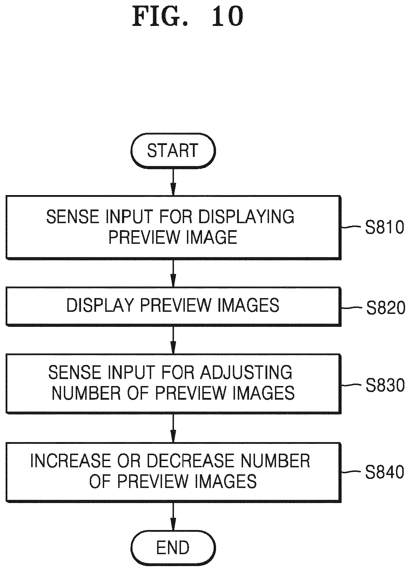

FIG. 10 is a flowchart illustrating an example method of operating the image display apparatus 100, according to an example embodiment of the present disclosure.

Referring to FIG. 10, in operation S810, the image display apparatus 100 may sense a user input for displaying a preview image.

For example, the image display apparatus 100 may sense an input (e.g., a user input) of a specific key included in the control apparatus 200 while displaying an image corresponding to a region of a planar 360-degree image or a spherical 360-degree image. However, embodiments are not limited thereto.

In operation S820, the image display apparatus 100 may control the display to display preview images of one or more regions different from the region displayed on the display, according to the user input for displaying a preview image.

In operation S830, the image display apparatus 100 may sense an input (e.g., a user input) for adjusting the number of preview images, when the preview images have been displayed. For example, the image display apparatus 100 may sense an input of a directional key or a number key included in the control apparatus 200, but embodiments are not limited thereto.

When the input for adjusting the number of preview images is sensed, the image display apparatus 100 may increase or decrease the number of preview images, in operation S840. For example, when a single preview image has been displayed and an upward key or a rightward key is sensed, the image display apparatus 100 may display two preview images respectively corresponding to different two regions.

On the other hand, when two preview images have been displayed and a downward key or a leftward key is sensed, the image display apparatus 100 may display only a single preview image.

According to an embodiment, an indicator indicating the location or range of a region displayed on a display from among a 360-degree image is displayed, and thus a user may easily ascertain the location or range of a currently-being displayed image.

In addition, according to an embodiment, in response to receiving an input, an image of a preset region may be displayed, a preview image may be displayed, or the number of preview images may be adjusted, and thus the user may easily control the 360-degree image.

A method of operating an image display apparatus according to an embodiment may be embodied as program commands executable by various computer means and may be recorded on a computer-readable recording medium. The computer-readable recording medium may include program commands, data files, data structures, and the like separately or in combinations. The program commands to be recorded on the computer-readable recording medium may be specially designed and configured for embodiments of the present disclosure or may be well-known to and be usable by one of ordinary skill in the art of computer software. Examples of the computer-readable recording medium include a magnetic medium such as a hard disk, a floppy disk, or a magnetic tape, an optical medium such as a compact disk-read-only memory (CD-ROM) or a digital versatile disk (DVD), a magneto-optical medium such as a floptical disk, and a hardware device specially configured to store and execute program commands such as a ROM, a random-access memory (RAM), or a flash memory. Examples of the program commands are advanced language codes that can be executed by a computer by using an interpreter or the like as well as machine language codes made by a compiler.

While one or more example embodiments have been described with reference to the figures, it will be understood by those of ordinary skill in the art that various changes in form and details may be made therein without departing from the scope as defined by the following claims.

## Claims

1. An image display apparatus (100) configured to display a 360-degree image (310), the image display apparatus (100) comprising:
a display (120);
a sensor (130) configured to sense an input; and
a controller (110) configured to:
control the display to display a first image corresponding to a region of the 360-degree image, and an indicator (340) including a pointer (345) pointing to a location of the region, the indicator being a two-dimensional representation of a three-dimensional (3D) shape of the 360-degree image; and
in response to an input for moving the region, control movement of the region (320) corresponding to the sensed input for moving, and control the display to display a second image (335) corresponding to a region (325) to which the region (320) has been moved, and to move the pointer (345) within the indicator (340) based on the movement of the region (320),
wherein the pointer (345) is movable in an altitudinal direction and an azimuthal direction within the indicator (340);
**characterized in that** the controller is further configured to:
receive the sensed input for displaying a preview image, and
control the display to display on the displayed region one or more preview images corresponding to one or more regions which are different from the region displayed on the display, in response to the input for displaying the preview image.

2. The image display apparatus (100) of claim 1, wherein
the sensor (130) is further configured to sense four directional key inputs as the input for moving the region (320), and
the controller (110) is further configured to move the pointer (345) in an altitudinal direction within the indicator (340) in response to an upward or downward key input from among the four directional key inputs and to move the pointer (345) in an azimuthal direction within the indicator (340) in response to a leftward or rightward key input from among the four directional key inputs.

3. The image display apparatus (100) of claim 1 or 2, wherein
the sensor (130) is further configured to sense a specific key input, and
the controller (110) is further configured to control displaying of an image of a preset region of the 360-degree image (310) in response to the specific key input.

4. The image display apparatus (100) of any one of claims 1 to 3, wherein
the sensor (130) is further configured to sense a zoom-in input or a zoom-out input, and
the controller (110) is further configured to zoom in to an image displayed on the display (120) and decrease a size or area of the pointer (345) within the indicator (340) in response to the zoom-in input, and zoom out from the image displayed on the display (120) and increase a size or area of the pointer (345) within the indicator (340) in response to the zoom-out input.

5. The image display apparatus (100) of claim 4, wherein
the sensor (130) is further configured to sense an input for adjusting a number of preview images, and
the controller (110) is further configured to increase or decrease the number of preview images displayed on the display (120) in response to the input for adjusting the number of preview images.

6. The image display apparatus (100) of claim 4 or 5, wherein
the sensor (130) is further configured to sense an input for selecting one of the preview images displayed on the display (120), and
the controller (110) is further configured to control the display (120) to display the selected preview image as an entire image in response to the input of selecting one of the preview images.

7. A method of operating an image display apparatus (100) configured to display a 360-degree image (310), the method comprising:
displaying a first image (330) corresponding to a region (320) of the 360-degree image (310), and an indicator (340) including a pointer (345) pointing to a location of the region (320), the indicator being a two-dimensional representation of a three-dimensional (3D) shape of the 360-degree image;
receiving an input for moving the region (320); and
in response to the input for moving the region, displaying a second image (335) corresponding to a region (325) to which the region (320) has been moved, and moving the pointer (345) within the indicator (340) based on the movement of the region (320),
wherein the pointer (345) is movable in an altitudinal direction and an azimuthal direction within the indicator (340);
**characterized by**
receiving the sensed input for displaying a preview image, and
displaying on the displayed region one or more preview images corresponding to one or more regions which are different from the region displayed on the display, in response to the input for displaying the preview image.

8. The method of claim 7, wherein
the sensing of the input for moving the region (320) comprises sensing four directional key inputs, and
the moving of the pointer (345) comprises moving the pointer (345) in an altitudinal direction within the indicator (340) in response to an upward or downward key input from among the four directional key inputs, and moving the pointer (345) in an azimuthal direction within the indicator (340) in response to a leftward or rightward key input from among the four directional key inputs.

9. The method of claim 7 or 8, further comprising:
sensing a specific key input; and
displaying an image of a preset region of the 360-degree image (310) in response to the specific key input.

10. The method of any one of claims 7 to 9, further comprising:
sensing a zoom-in input or a zoom-out input; and
zooming in to an image displayed on a display (120) and decreasing a size or area of the pointer (345) within the indicator (340) in response to the zoom-in input, and zooming out from the image displayed on the display (120) and increasing a size or area of the pointer (345) within the indicator (340) in response to the zoom-out input.

11. The method of claim 7, further comprising:
sensing an input for adjusting a number of preview images; and
increasing or decreasing the number of preview images displayed on the display (120) in response to the input for adjusting the number of preview images.

12. The method of claim 11, further comprising:
sensing an input for selecting one of the preview images displayed on the display (120); and
displaying the selected preview image as an entire image on the display (120) in response to the input of selecting one of the preview images.

13. A non-transitory computer-readable recording medium having recorded thereon a computer program, which, when executed by a computer, performs the method of any one of claims 7 to 12.

## Patentansprüche

1. Bildanzeigevorrichtung (100), die dazu konfiguriert ist, ein 360-Grad-Bild (310) anzuzeigen, wobei die Bildanzeigevorrichtung (100) umfasst:
eine Anzeige (120);
einen Sensor (130), der dazu konfiguriert ist, eine Eingabe zu erfassen; und
eine Steuerung (110), die konfiguriert ist zum:
Steuern der Anzeige, um ein erstes Bild, das einem Bereich des 360-Grad-Bildes entspricht, und einen Indikator (340) anzuzeigen, der einen Zeiger (345) beinhaltet, der auf eine Stelle des Bereichs zeigt, wobei der Indikator eine zweidimensionale Darstellung einer dreidimensionalen (3D) Form des 360-Grad-Bildes ist; und
als Reaktion auf eine Eingabe zum Verschieben des Bereichs, Steuern der Verschiebung des Bereichs (320), die der erfassten Eingabe zum Verschieben entspricht, und Steuern der Anzeige, um ein zweites Bild (335) anzuzeigen, das einem Bereich (325) entspricht, in den der Bereich (320) verschoben wurde, und den Zeiger (345) innerhalb des Indikators (340) auf Grundlage der Verschiebung des Bereichs (320) zu verschieben,
wobei der Zeiger (345) in einer Höhenrichtung und einer Azimutrichtung innerhalb des Indikators (340) verschiebbar ist;
**dadurch gekennzeichnet, dass** die Steuerung ferner konfiguriert ist zum:
Empfangen der erfassten Eingabe zum Anzeigen eines Vorschaubilds und Steuern der Anzeige, um in dem angezeigten Bereich ein oder mehrere Vorschaubilder anzuzeigen, die einem oder mehreren Bereichen entsprechen, die sich von dem auf der Anzeige angezeigten Bereich unterscheiden, als Reaktion auf die Eingabe zum Anzeigen des Vorschaubildes.

2. Bildanzeigevorrichtung (100) nach Anspruch 1, wobei
der Sensor (130) ferner dazu konfiguriert ist, vier Richtungstasteneingaben als die Eingabe zum Verschieben des Bereichs (320) zu erfassen, und
die Steuerung (110) ferner dazu konfiguriert ist, den Zeiger (345) in einer Höhenrichtung innerhalb des Indikators (340) als Reaktion auf eine Aufwärts- oder Abwärtstasteneingabe aus den vier Richtungstasteneingaben zu verschieben und den Zeiger (345) in einer Azimutrichtung innerhalb des Indikators (340) als Reaktion auf eine Nach-links- oder Nach-rechts-Tasteneingabe aus den vier Richtungstasteneingaben zu verschieben.

3. Bildanzeigevorrichtung (100) nach Anspruch 1 oder 2, wobei
der Sensor (130) ferner dazu konfiguriert ist, eine bestimmte Tasteneingabe zu erfassen,
und
die Steuerung (110) ferner dazu konfiguriert ist, das Anzeigen eines Bildes eines voreingestellten Bereichs des 360-Grad-Bildes (310) als Reaktion auf die bestimmte Tasteneingabe zu steuern.

4. Bildanzeigevorrichtung (100) nach einem der Ansprüche 1 bis 3, wobei
der Sensor (130) ferner dazu konfiguriert ist, eine Vergrößerungseingabe oder eine Verkleinerungseingabe zu erfassen, und
die Steuerung (110) ferner dazu konfiguriert ist, als Reaktion auf die Vergrößerungseingabe ein auf der Anzeige (120) angezeigtes Bild zu vergrößern und eine Größe oder Fläche des Zeigers (345) innerhalb des Indikators (340) zu verringern und als Reaktion auf die Verkleinerungseingabe das auf der Anzeige (120) angezeigte Bild zu verkleinern und eine Größe oder Fläche des Zeigers (345) innerhalb des Indikators (340) zu erhöhen.

5. Bildanzeigevorrichtung (100) nach Anspruch 4, wobei
der Sensor (130) ferner dazu konfiguriert ist, eine Eingabe zum Anpassen einer Anzahl von Vorschaubildern zu erfassen, und
die Steuerung (110) ferner dazu konfiguriert ist, die Anzahl von Vorschaubildern, die auf der Anzeige (120) angezeigt wird, als Reaktion auf die Eingabe zum Anpassen der Anzahl von Vorschaubildern zu erhöhen oder zu verringern.

6. Bildanzeigevorrichtung (100) nach Anspruch 4 oder 5, wobei
der Sensor (130) ferner dazu konfiguriert ist, eine Eingabe zum Auswählen eines der auf der Anzeige (120) angezeigten Vorschaubilder zu erfassen, und
die Steuerung (110) ferner dazu konfiguriert ist, die Anzeige (120) zu steuern, um das ausgewählte Vorschaubild als ein Gesamtbild als Reaktion auf die Eingabe zum Auswählen eines der Vorschaubilder anzuzeigen.

7. Verfahren zum Betreiben einer Bildanzeigevorrichtung (100), die dazu konfiguriert ist, ein 360-Grad-Bild (310) anzuzeigen, wobei das Verfahren umfasst:
Anzeigen eines ersten Bildes (330), das einem Bereich (320) des 360-Grad-Bildes (310) entspricht, und eines Indikators (340), der einen Zeiger (345) beinhaltet, der auf eine Stelle des Bereichs (320) zeigt, wobei der Indikator eine zweidimensionale Darstellung einer dreidimensionalen (3D) Form des 360-Grad-Bildes ist;
Empfangen einer Eingabe zum Verschieben des Bereichs (320); und
als Reaktion auf die Eingabe zum Verschieben des Bereichs, Anzeigen eines zweiten Bilds (335), das einem Bereich (325) entspricht, in den der Bereich (320) verschoben wurde, und Verschieben des Zeigers (345) innerhalb des Indikators (340) auf Grundlage der Verschiebung des Bereichs (320),
wobei der Zeiger (345) in einer Höhenrichtung und einer Azimutrichtung innerhalb des Indikators (340) verschiebbar ist;
**gekennzeichnet durch**
Empfangen der erfassten Eingabe zum Anzeigen eines Vorschaubildes, und
Anzeigen in dem angezeigten Bereich eines oder mehrerer Vorschaubilder, die einem oder mehreren Bereichen entsprechen, die sich von dem auf der Anzeige angezeigten Bereich unterscheiden, als Reaktion auf die Eingabe zum Anzeigen des Vorschaubildes.

8. Verfahren nach Anspruch 7, wobei
das Erfassen der Eingabe zum Verschieben des Bereichs (320) Erfassen von vier Richtungstasteneingaben umfasst, und
das Verschieben des Zeigers (345) Verschieben des Zeigers (345) in einer Höhenrichtung innerhalb des Indikators (340) als Reaktion auf eine Aufwärts- oder Abwärtstasteneingabe aus den vier Richtungstasteneingaben und Verschieben des Indikators (345) in einer Azimutrichtung innerhalb des Indikators (340) als Reaktion auf eine Nach-links- oder Nach-rechts-Tasteneingabe aus den vier Richtungstasteneingaben umfasst.

9. Verfahren nach Anspruch 7 oder 8, ferner umfassend:
Erfassen einer bestimmten Tasteneingabe; und
Anzeigen eines Bildes eines voreingestellten Bereichs des 360-Grad-Bildes (310) als Reaktion auf die bestimmte Tasteneingabe.

10. Verfahren nach einem der Ansprüche 7 bis 9, ferner umfassend:
Erfassen einer Vergrößerungseingabe oder einer Verkleinerungseingabe; und
Vergrößern eines auf einer Anzeige (120) angezeigten Bildes und Verringern einer Größe oder Fläche des Zeigers (345) innerhalb des Indikators (340) als Reaktion auf die Vergrößerungseingabe und Verkleinern des auf der Anzeige (120) angezeigten Bildes und Erhöhen einer Größe oder Fläche des Zeigers (345) innerhalb des Indikators (340) als Reaktion auf die Verkleinerungseingabe.

11. Verfahren nach Anspruch 7, ferner umfassend:
Erfassen einer Eingabe zum Anpassen einer Anzahl von Vorschaubildern; und
Erhöhen oder Verringern der Anzahl von Vorschaubildern, die auf der Anzeige (120) angezeigt wird, als Reaktion auf die Eingabe zum Einstellen der Anzahl von Vorschaubildern.

12. Verfahren nach Anspruch 11, ferner umfassend:
Erfassen einer Eingabe zum Auswählen eines der Vorschaubilder, die auf der Anzeige (120) angezeigt werden; und
Anzeigen des ausgewählten Vorschaubildes als ein Gesamtbild auf der Anzeige (120) als Reaktion auf die Eingabe zum Auswählen eines der Vorschaubilder.

13. Dauerhaftes computerlesbares Aufzeichnungsmedium, auf dem ein Computerprogramm gespeichert ist, das bei Ausführung durch einen Computer das Verfahren nach einem der Ansprüche 7 bis 12 durchführt.

## Revendications

1. Appareil d'affichage d'image (100) configuré pour afficher une image à 360 degrés (310), l'appareil d'affichage d'image (100) comprenant :
un dispositif d'affichage (120) ;
un capteur (130) configuré pour détecter une entrée ; et
un dispositif de commande (110) configuré pour :
commander au dispositif d'affichage d'afficher une première image correspondant à une zone de l'image à 360 degrés, et un indicateur (340) comprenant un pointeur (345) pointant vers un emplacement de la zone, l'indicateur étant une représentation bidimensionnelle d'une forme tridimensionnelle (3D) de l'image à 360 degrés ; et
en réponse à une entrée pour déplacer la zone, commander le déplacement de la zone (320) correspondant à l'entrée détectée pour se déplacer, et commander au dispositif d'affichage à afficher une seconde image (335) correspondant à une zone (325) vers laquelle la zone (320) a été déplacée, et pour déplacer le pointeur (345) à l'intérieur de l'indicateur (340) sur la base du déplacement de la zone (320),
ledit pointeur (345) étant mobile dans une direction altitudinale et une direction azimutale à l'intérieur de l'indicateur (340) ;
**caractérisé en ce que** ledit dispositif de commande est en outre configuré pour :
recevoir l'entrée détectée pour afficher une image d'aperçu, et
commander au dispositif d'affichage d'afficher sur la zone affichée une ou plusieurs images d'aperçu correspondant à une ou plusieurs zones qui sont différentes de la zone affichée sur le dispositif d'affichage, en réponse à l'entrée pour afficher l'image d'aperçu.

2. Appareil d'affichage d'images (100) selon la revendication 1,
ledit capteur (130) étant en outre configuré pour détecter quatre entrées de touches directionnelles en tant qu'entrée pour déplacer la zone (320), et
ledit dispositif de commande (110) étant en outre configuré pour déplacer le pointeur (345) dans une direction altitudinale à l'intérieur de l'indicateur (340) en réponse à une entrée de touche vers le haut ou vers le bas parmi les quatre entrées de touche directionnelles et pour déplacer le pointeur (345) dans une direction azimutale à l'intérieur de l'indicateur (340) en réponse à une entrée de touche vers la gauche ou vers la droite parmi les quatre entrées de touche directionnelles.

3. Appareil d'affichage d'images (100) selon la revendication 1 ou 2,
ledit capteur (130) étant en outre configuré pour détecter une entrée de touche spécifique,
et
ledit dispositif de commande (110) étant en outre configuré pour commander l'affichage d'une image d'une zone prédéfinie de l'image à 360 degrés (310) en réponse à l'entrée de touche spécifique.

4. Appareil d'affichage d'images (100) selon l'une quelconque des revendications 1 à 3,
ledit capteur (130) étant en outre configuré pour détecter une entrée de zoom avant ou une entrée de zoom arrière, et
ledit dispositif de commande (110) étant en outre configuré pour effectuer un zoom avant sur une image affichée sur le dispositif d'affichage (120) et diminuer une taille ou une surface du pointeur (345) dans l'indicateur (340) en réponse à l'entrée de zoom avant, et effectuer un zoom arrière à partir de l'image affichée sur le dispositif d'affichage (120) et augmenter une taille ou une surface du pointeur (345) à l'intérieur de l'indicateur (340) en réponse à l'entrée de zoom arrière.

5. Appareil d'affichage d'images (100) selon la revendication 4,
ledit capteur (130) étant en outre configuré pour détecter une entrée pour régler un nombre d'images d'aperçu, et
ledit dispositif de commande (110) étant en outre configuré pour augmenter ou diminuer le nombre d'images d'aperçu affichées sur le dispositif d'affichage (120) en réponse à l'entrée pour régler le nombre d'images d'aperçu.

6. Appareil d'affichage d'images (100) selon la revendication 4 ou 5,
ledit capteur (130) étant en outre configuré pour détecter une entrée pour choisir l'une des images d'aperçu affichées sur le dispositif d'affichage (120), et
ledit dispositif de commande (110) étant en outre configuré pour commander au dispositif d'affichage (120) d'afficher l'image d'aperçu choisie sous forme d'une image entière en réponse à l'entrée de choix de l'une des images d'aperçu.

7. Procédé d'exploitation d'un appareil d'affichage d'image (100) configuré pour afficher une image à 360 degrés (310), le procédé comprenant :
l'affichage d'une première image (330) correspondant à une zone (320) de l'image à 360 degrés (310) et un indicateur (340) comprenant un pointeur (345) pointant vers un emplacement de la zone (320), l'indicateur étant une représentation bidimensionnelle d'une forme tridimensionnelle (3D) de l'image à 360 degrés ;
la réception d'une entrée pour déplacer la zone (320) ; et
en réponse à l'entrée pour déplacer la zone, l'affichage d'une seconde image (335) correspondant à une zone (325) vers laquelle la zone (320) a été déplacée, et le déplacement du pointeur (345) à l'intérieur de l'indicateur (340) sur la base du déplacement de la zone (320),
ledit pointeur (345) étant mobile dans une direction altitudinale et une direction azimutale à l'intérieur de l'indicateur (340) ;
**caractérisé par**
la réception de l'entrée détectée pour afficher une image d'aperçu, et
l'affichage sur la zone affichée d'une ou de plusieurs images d'aperçu correspondant à une ou plusieurs zone qui sont différentes de la zone affichée sur le dispositif d'affichage, en réponse à l'entrée pour afficher l'image d'aperçu.

8. Procédé selon la revendication 7,
ladite détection de l'entrée pour déplacer la zone (320) comprenant la détection de quatre entrées de touches directionnelles, et
ledit déplacement du pointeur (345) comprenant le déplacement du pointeur (345) dans une direction altitudinale à l'intérieur de l'indicateur (340) en réponse à une entrée de touche vers le haut ou vers le bas parmi les quatre entrées de touche directionnelles, et le déplacement du pointeur (345) dans une direction azimutale à l'intérieur de l'indicateur (340) en réponse à une entrée de touche vers la gauche ou vers la droite parmi les quatre entrées de touche directionnelles.

9. Procédé selon la revendication 7 ou 8, comprenant en outre :
la détection d'une entrée de touche spécifique ; et
l'affichage d'une image d'une zone prédéfinie de l'image à 360 degrés (310) en réponse à l'entrée de touche spécifique.

10. Procédé selon l'une quelconque des revendications 7 à 9, comprenant en outre :
la détection d'une entrée de zoom avant ou d'une entrée de zoom arrière ; et
la réalisation d'un zoom avant sur une image affichée sur un dispositif d'affichage (120) et la diminution d'une taille ou d'une surface du pointeur (345) dans l'indicateur (340) en réponse à l'entrée de zoom avant, et la réalisation d'un zoom arrière à partir de l'image affichée sur le dispositif d'affichage (120) et l'augmentation d'une taille ou d'une surface du pointeur (345) à l'intérieur de l'indicateur (340) en réponse à l'entrée de zoom arrière.

11. Procédé selon la revendication 7, comprenant en outre :
la détection d'une entrée pour régler un nombre d'images d'aperçu ; et
l'augmentation ou la diminution du nombre d'images d'aperçu affichées sur le dispositif d'affichage (120) en réponse à l'entrée pour régler le nombre d'images d'aperçu.

12. Procédé selon la revendication 11, comprenant en outre :
la détection d'une entrée pour choisir l'une des images d'aperçu affichées sur le dispositif d'affichage (120) ; et
l'affichage de l'image d'aperçu choisie sous la forme d'une image entière sur le dispositif d'affichage (120) en réponse à l'entrée de choix de l'une des images d'aperçu.

13. Support d'enregistrement lisible par ordinateur non-transitoire sur lequel est stocké un programme informatique, qui lorsqu'il est exécuté par un ordinateur, réalise le procédé selon l'une quelconque des revendications 7 à 12.
